Europäisches Patentamt

European Patent Office

Office européen des brevets

(19)

(11) Veröffentlichungsnummer : **0 463 311 B1**

# (12) EUROPÄISCHE PATENTSCHRIFT

(45) Veröffentlichungstag der Patentschrift :
**15.09.93 Patentblatt 93/37**

(51) Int. Cl.$^5$ : **E04B 1/80**, F25D 23/06

(21) Anmeldenummer : **91106109.1**

(22) Anmeldetag : **17.04.91**

(54) **Vakuumisolationspanel mit asymmetrischem Aufbau.**

(30) Priorität : **22.06.90 DE 4019870**

(43) Veröffentlichungstag der Anmeldung :
**02.01.92 Patentblatt 92/01**

(45) Bekanntmachung des Hinweises auf die
Patenterteilung :
**15.09.93 Patentblatt 93/37**

(84) Benannte Vertragsstaaten :
**AT BE CH DE DK ES FR GB IT LI LU NL SE**

(56) Entgegenhaltungen :
**EP-A- 0 190 582**
**DE-A- 3 915 170**
**US-A- 2 745 173**
**US-A- 3 302 358**
**US-A- 3 790 243**
**US-A- 4 444 821**

(73) Patentinhaber : **Degussa Aktiengesellschaft
Weissfrauenstrasse 9
D-60311 Frankfurt (DE)**

(72) Erfinder : **Reuter, Roland
Zimmermannweg 48
W-6100 Darmstadt (DE)**
Erfinder : **Sextl, Gerhard, Dr.
Am Frohnbügel 11
W-8752 Geiselbach (DE)**
Erfinder : **Strack, Hans, Dr.
Riemenschneider Strasse 1
W-8755 Alzenau (DE)**

EP 0 463 311 B1

**Beschreibung**

Die Erfindung betrifft einen Formkörper, vorzugsweise plattenförmig, für die Verwendung als Wärmedämmung sowie das Verfahren zu seiner Herstellung.

Es ist bekannt, Wärmedämmplatten oder flache, ebene Wärmedämmkörper auf Basis von gefällter Kieselsäure herzustellen, die evakuiert und mit einer mehrschichtigen Umhüllung versehen sind.

So beschreiben die EP-A 0 190 582 sowie die EP-A 0 254 993 eine Umhüllung aus Verbundfolien, die zusätzlich eine Metallfolie aus z. B. Aluminium enthalten. Diese Folien sollen luft- und wasserdicht sein.

Die EP-B 0 164 006 beschreibt Wärmedämmplatten, die feinteilige Metalloxide enthalten und evakuiert sind. Das Umhüllungsmaterial kann eine Verbundfolie mit einer Schichtfolge aus thermoplastischem Material/Metallfolie/thermoplastischem Material sein.

Die japanische Offenlegungsschrift Sho 62-207 777 (12.09.1987) beschreibt wärmeisolierende Elemente, die hergestellt werden, indem in einen Behälter aus heißversiegelbarem Kunststofflaminat Perlit oder andere leicht poröse Materialien eingefüllt werden und das Innere dieses Behälters dann evakuiert wird.

Heißversiegelte wärmeisolierende Elemente bestehen aus Kunststofflaminat der Dicke 25 µm mit einer Wasserdampfdurchlässigkeit 1,0 g/m$^2$.d bei 38 °C und 90 % relativer Feuchtigkeit sowie der Sauerstoffdurchlässigkeit 2,0 cm$^3$/m$^2$.d bei 23 °C und 90 % relativer Feuchtigkeit. Die Laminate bestehen aus Vinylidenchlorid-Vinylchlorid-Copolymer, das zumindest einseitig mit einer 100 bis 1000 Angström dicken Aluminiumschicht bedampft ist. Es wird zumindest eine Laminatschicht verwendet.

Die bekannte Verwendung von metallbeschichteten Verbundfolien hat den Nachteil, daß parallel zur Folienoberfläche Wärme geleitet werden kann. Bei der Anwendung in Isolationsmaterialien führt dies zu unerwünschten Wärmebrücken an den Rändern des Wärmedämmkörpers zwischen Kalt- und Warmseite.

Der damit verbundene nachteilige Einfluß auf die Gesamt-Wärmeleitfähigkeit eines Wärmedämmkörpers wird bei der Wärmeleitfähigkeitsmessung nach dem absoluten Einplattenverfahren mit Schutzringtechnik nach Kohlrausch (F. Kohlrausch: "Praktische Physik", Bd. 1, 22. Aufl., B.G. Teubner Verlag, Stuttgart, 1968, S. 375 ff.) nicht erfaßt.

Ein Wärmedämmkörper, der gemäß EP-A 0 190 582 unter Verwendung einer metallhaltigen Folie gefertigt wurde, zeigt, gemessen nach dem oben genannten Verfahren,bei 23 °C eine Wärmeleitfähigkeit von 8 mW/(m.K). Wählt man eine Meßanordnung ohne Schutzring, so steigt die Wärmeleitfähigkeit - abhängig von Formkörper-Geometrie und Größe und von der Metallschichtdicke in der Umhüllungsfolie - auf zum Teil erheblich höhere Werte an.

Die Isolationsleistung des gesamten Wärmedämmkörpers hängt also auch entscheidend davon ab, ob die bei der Herstellung verwendete Umhüllungsfolie metallhaltig ist oder nicht.

Aus den älteren Patentanmeldungen DE-OS 39 15 170 und DE-OS 40 08 490.9 sind Formkörper für die Verwendung als Wärmedämmung bekannt, die aus einem feinverteilten, pulverförmigen bzw. faserförmigen Stoff, der eine Wasseraufnahmekapazität von 4 bis 50 Gew.-% bei 23 °C und 85 % relativer Feuchte hat, und einer metallfreien Umhüllung, die diesem feinverteilten, pulverförmigen bzw. faserförmigen Stoff umhüllt und dabei Wasserdampfdurchlässigkeiten von 0,1 bis 0,5 g/m$^2$/d bzw. 0,02 bis 0,1 g/m$^2$/d bei 23 °C und 85 % relativer Feuchte und Gasdurchlässigkeiten von 0,1 bis 0,5 cm$^3$/m$^2$/d/bar bzw. für die Gase $N_2$, $O_2$, $CO_2$ in der Summe von 0,05 bis 0,5 cm$^3$/m$^2$/d/bar bei 23 °C aufweisen, bestehen.

Diese bekannten Formkörper können unter den genannten Bedingungen ihre niedrige Wärmeleitfähigkeit über nur etwa 3 Jahre bzw. 7,2 Jahre erhalten.

Bei einem Einsatz in Kühlmöbeln ist es jedoch erforderlich, daß die Wärmedämmformkörper die niedrige Wärmeleitfähigkeit über einen längeren Zeitraum behalten.

Es besteht somit die Aufgabe, Wärmedämmkörper herzustellen, die eine lange Lebensdauer erreichen und im weiteren keine durch metallische Bestandteile oder Umhüllung hervorgerufenen Wärmebrücken an den Rändern des Wärmedämmkörpers zwischen der Kalt- und Warmseite haben.

Gegenstand der Erfindung ist ein Formkörper, vorzugsweise plattenförmig, für die Verwendung als Wärmedämmung, hergestellt aus

a) einem feinverteilten, pulverförmigen bzw faserförmigen Stoff, der eine Wasseraufnahmekapazität von 4 bis 50 Gew.-%, bei 23 °C und 85 % relative Feuchte hat,

b) einer Umhüllung aus zwei Teilen mit asymmetrischem Aufbau, die diesen feinverteilten, pulverförmigen bzw. faserförmigen Stoff enthält, wobei der erste Teil der Umhüllung eine metallfreie Mehrschichtenfolie, die folgendermaßen aufgebaut ist:

LLPDE    lineares Polyäthylen

HV        Haftvermittler

EVOH    Ethylen-Vinylalkohol-Copolymerisat

HV        Haftvermittler

LLPDE  lineares Polyäthylen

PVDC  Polyvinylidenchlorid

und derart gemuldet (tiefgezogen) ist, daß diese Mulde durch den gegebenenfalls getrockneten und gegebenenfalls verpreßten pulverförmigen bzw. faserförmigen Stoff vollständig ausgefüllt wird, und der zweite Teil ("Deckel") eine metallhaltige Mehrschichtenfolie, die folgendermaßen aufgebaut ist:

Polyester

HV

Al-Folie

HV

Polyethylen

und plan sein kann und mit der Mulde so verbunden ist, daß ein gas- und wasserdampfdichter Abschluß gewährleistet ist, und beide Teile dabei Wasserdampfdurchlässigkeiten zwischen 0 und 0,2 $g/m^2/d$ bei 23 °C und 85 % relativer Feuchte und Gasdurchlässigkeiten für $N_2$, $O_2$ und $CO_2$ von in der Summe 0 bis 0,5 $cm^3/m^2/d/bar$ bei 23 °C aufweisen,

mit der Eigenschaft, Wasser bis zu einer Menge von 2 bis 15 Gew.-% aufzunehmen, ohne daß dabei seine Wärmeleitfähigkeit um mehr als 25 % verschlechtert wird.

Eine Umhüllung mit asymmetrischem Aufbau hat den Vorteil, daß als Deckelfolien (zweiter Teil der Umhüllung) auch metallhaltige plane Folien verwendet werden können, die, ohne daß bei den planen Folien Wärmebrücken auftreten können, sehr niedrige Wasserdampfdurchlässigkeiten zwischen o und 0,02 $g/m^2/d$ bei 23 °C und 85 % relativer Feuchte und geringe Gasdurchlässigkeiten für $N_2$, $O_2$ und $CO_2$ von in der Summe zwischen 0 und 0,5 $cm^3/m^2/d/bar$ bei 23 °C haben, so daß die Lebensdauer der Wärmedämmkörper nochmals deutlich verlängert werden kann.

Der erfindungsgemäße Wärmedämmformkörper kann evakuiert sein. Bevorzugterweise beträgt der Innendruck ca. 1 mbar.

Die Stampfdichte des in den Wärmedämmformkörper enthaltenen feinverteilten Stoffes kann 40 bis 200 g/vorzugsweise 50 bis 120 g/l betragen.

Der feinverteilte, pulverförmige bzw. faserförmige Stoff kann in einer mikroporösen Umhüllung verpreßt werden.

Der feinverteilte, pulverförmige bzw. faserförmige Stoff kann in einer mikroporösen Umhüllung getrocknet werden.

In einer bevorzugten Ausführungsform kann die mikroporöse Umhüllung, die den feinverteilten, pulverförmigen bzw. faserförmigen Stoff in gepreßtem und getrocknetem Zustand enthält, in die zweiteilige Umhüllung mit asymmetrischem Aufbau eingebracht werden, wobei als Deckelfolie bevorzugterweise eine metallhaltige Folie verwendet wird.

Den erfindungsgemäßen Formkörper kann man herstellen, indem man

a) gegebenenfalls einen feinverteilten, pulverförmigen bzw. faserförmigen Stoff, der eine Wasseraufnahmekapazität von 4 bis 50 Gew.-% (bei 23 °C und 85 % relativer Feuchte) aufweist, unter Bedingungen trocknet, die für ein Austreiben des Oberflächenwassers ausreichen,

b) den pulverförmigen bzw. faserförmigen Stoff gegebenenfalls verpreßt, wobei gegebenenfalls eine Preßform verwendet werden kann,

c) den gegebenenfalls getrockneten und und gegebenenfalls verpreßten pulverförmigen bzw. faserförmigen Stoff in den gemuldeten (tiefgezogenen) metallfreien Teil der Umhüllung, die eine Wasserdampfdurchlässigkeit von 0,02 bis 0,2 $g/m^2/d$ bei 23 °C und 85 % relativer Feuchte und Gasdurchlässigkeiten für $N_2$, $O_2$; und $CO_2$ von in der Summe 0,05 bis 0,5 $cm3/m^2/d/bar$ bei 23 °C aufweist, einbringt.

d) den gegebenenfalls getrockneten und gegebenenfalls verpreßten pulverförmigen bzw. faserförmigen Stoff im gemuldetem (tiefgezogenen) Teil der Umhüllung auf einen Druck zwischen 0,1 und 1 mbar evakuiert.

e) im Vakuum den zweiten metallfreien oder metallhaltigen und planen Teil der Umhüllung, die eine Wasserdampfdurchlässigkeit von 0 bis 0,2 $g/m^2/d$ bei 23 °C und 85 % relativer Feuchte und Gasdurchlässigkeiten für $N_2$, $O_2$, und $CO_2$ von in der Summe 0 bis 0,5 $cm^3/m^2/d/bar$ bei 23 °C aufweist, mit dem ersten metallfreien Umhüllungsteil derart verbindet, daß das Vakuum im Innern der Umhüllung erhalten bleibt und ein - soweit möglich - gas- und wasserdampfdichter Abschluß entsteht.

In einer bevorzugten Ausführungsform des erfindungsgemäßen Verfahrens kann man die zweiteilige Umhüllung mit asymmetrischem Aufbau im Bereich zwischen 0,1 und 1 mbar evakuieren.

In einer bevorzugten Ausführungsform des erfindungsgemäßen Verfahrens kann man den feinverteilten, pulverförmigen bzw. faserförmigen Stoff in einer mikroporösen Umhüllung trocknen.

In einer besonders bevorzugten Ausführungsform des erfindungsgemäßen Verfahrens kann man den feinverteilten, pulverförmigen bzw. faserförmigen Stoff in einer mikroporösen Umhüllung verpressen und gegebenenfalls danach trocknen.

Die Trocknung des feinverteilten, pulverförmigen bzw faserförmigen Stoffes kann in einer bevorzugten Ausführungsform der Erfindung mittels Mikrowellen erfolgen.

Als mikroporöse Umhüllung, die im Prinzip dazu dient, den feinteiligen, pulverförmigen Stoff während des Trocknens und Verpressens zusammenzuhalten, kann eine Folie oder ein Vlies-Stoff aus z. B. Polypropylen, Polyester oder Filterpapier (Cellulose) verwendet werden.

Im allgemeinen kann zu diesem Zweck eine Folie oder ein Material verwendet werden, das Gase (z. B. Luft) und Feuchtigkeit durchläßt und den feinteiligen, pulverförmigen Stoff zurückhält.

Als feinverteilter, pulverförmiger Stoff kann im Prinzip jeder Stoff verwendet werden, dessen chemische Eigenschaften sich im Laufe der Zeit nicht verändern, und der eine Wasseraufnahmekapazität von 4 - 50 Gew.-% bei 23 °C und 85 % relativer Feuchte besitzt.

Die Wassermenge, die der erfindungsgemäße Formkörper aufnehmen darf, entspricht der Menge an Wasser, bei der die Wärmeleitfähigkeit des Formkörpers um nicht mehr als 25 % erhöht wird. Der in diesem Sinne zulässige Wassergehalt des Formkörpers beträgt 2 bis 15 Gew.-% und liegt im allgemeinen niedriger als die Wasseraufnahmekapazität des zur Herstellung des Formkörpers verwendeten pulverförmigen Stoffes.

In einer bevorzugten Ausführungsform kann die Wassermenge, die aufgenommen werden darf, im Formkörper 5 bis 12 Gew.-%, insbesondere 6 bis 7 Gew.-% betragen.

Die Gasmenge, die in den erfindungsgemäßen Wärmedämmformkörper permeieren darf, entspricht der Menge an Gasen (wie z. B. $N_2$, $O_2$ und $CO_2$), bei der die Wärmeleitfähigkeit um nicht mehr als 25 % erhöht wird.

Der in diesem Sinne zulässige Innendruck in dem Wärmedämmformkörper beträgt maximal 20 mbar bei einem Anfangsdruck von 1 mbar.

Bevorzugt wird ein feinverteiltes Siliciumdioxid-Material, hergestellt durch Umsetzung von einem Alkaliwasserglas und einer Mineralsäure zur Ausfällung des Siliciumdioxides, das allein oder in Mischung mit anderen Kieselsäuren oder pulver- oder faserförmigen Stoffen verwendet wird.

Derartige Fällungskieselsäuren werden beispielsweise in Ullmann's Enzyklopädie der technischen Chemie, 4. Auflage, Band 21, Seite 462 ff. beschrieben.

Beispielsweise sind zur Herstellung der erfindungsgemäßen Formkörper folgende Fällungskieselsäuren geeignet:

Sipernat 22 S, Sipernat 22 LS, Sipernat 50 S, FK 500 LS, FK 500 DS, FK 320 DS, FK 310, FK 700 DS.

Insbesondere werden Fällungskieselsäuren eingesetzt, die sprühgetrocknet und vermahlen wurden.

Derartige Fällungskieselsäuren sind unter der Bezeichnung FK 500 LS, FK 500 DS oder Sipernat 22 LS im Handel erhältlich.

Weitere geeignete Fällungskieseläuren werden in der US-PS 44 95 167 (Degussa) beschrieben.

Es können auch die folgenden Stoffe oder Stoffkombinationen eventuell nach Zumischung von organischen oder anorganischen Fasermaterialien, wie Glas-, keramik- oder Kunststoffasern, zur mechanischen Stabilisierung der Wärmedämmkörper eingesetzt werden:

Mischungen aus verschiedenen gefällten Kieselsäuren, wie z. B. Sipernat 22 LS und FK 500 LS, Sipernat 22 LS und FK 320 DS, FK 500 LS und FK 320 DS, FK 500 LS und FK 500 DS, FK 500 LS und FK 700 DS, FK 700 DS und FK 310.

Mischungen aus gefällten und pyrogenen Kieselsäuren, wie z. B. Sipernat 22 LS, FK 320 DS, FK 310, FK 700 DS und/oder FK 500 LS mit Aerosil A 200 und/oder Aerosil A 300.

Mischungen aus gefällten Kieselsäuren und Kieselsäure-Gelen, wie Sipernat 22 LS, FK 320 DS und/oder FK 500 LS mit Kieselsäuregelen (z. B. die Typen Syloid 72 und Syloid 244 der Fa. Grace, Worms).

Mischungen aus gefällten Kieselsäuren und mineralischen Stoffen, wie z. B. Sipernat 22 LS, FK 320 DS und/oder FK 500 LS mit Perliten, Kaolinit, Montmorillonit, Glimmer und/oder Calciumsulfat (Gips).

Mischungen aus gefällten Kieselsäuren und vermahlenen Gläsern oder glasartigen Stoffen, wie z. B. Sipernat 22 LS, FK 320 DS, FK 500 DS und/oder FK 500 LS mit Glasmehl und/oder sehr feiner Glaswolle.

Mischungen aus gefällten Kieselsäuren und Rußen, wie z. B. Sipernat 22 LS, FK 320 DS, FK 500 DS und/oder FK 500 LS mit Furnace-Rußen, Flammrußen und/oder Gasrußen.

Mischungen aus gefällten Kieselsäuren und synthetischen oder natürlichen silikatischen Stoffen, wie z. B. Sipernat 22 LS, FK 320 DS, FK 500 DS und/oder FK 500 LS mit synthetischen oder natürlichen Zeolithen oder Aluminiumsilikaten oder anderen silikatischen Stoffen (Calciumsilikat, Kieselgur, Extrusil).

Mischungen aus gefällten Kieselsäuren und synthetischen Abiallstoffen, wie z. B. Sipernat 22 LS, FK 320 DS, FK 500 DS und/oder FK 500 LS mit Flugstäuben, Kraftwerksaschen, Aschen von Verbrennungsanlagen aller Art.

Mischungen aus gefällten Kieselsäuren und nichtmetallischen Elementen, wie z. B. Sipernat 22 LS, FK 320 DS, FK 500 DS und/oder FK 500 LS mit Schwefel und/oder vermahlener Kohle.

Mischungen aus gefällten Kieselsäuren und Fasern, wie z. B. Sipernat 22 LS, FK 320 DS, FK 500 DS und/ oder FK 500 LS mit anorganischen oder organischen Fasern (Zellwolle oder feine Kunststoff-Fasern aller Art).

Mischungen aus gefällten Kieselsäuren wie z. B. Sipernat 22 LS, FK 320 DS, FK 500 LS und/oder FK 500 DS und organischen pulverförmigen Superabsorbern wie z. B. Polyacrylaten.

Mischungen aus gefällten Kieselsäuren und pyrogenen Metalloxiden, wie z. B. Sipernat 22 LS, FK 320 DS, FK 500 DS und/oder FK 500 LS mit pyrogenem Aluminiumoxid, Eisenoxid und/oder Titandioxid.

Pyrogene Kieselsäuren, wie z. B. Aerosil 200, Aerosil 300, Aerosil 380, Aerosil 450, OX 50, speziell vorbehandelte Aerosile, Aerosil MOX-Typen, Aerosil COK 84.

Mischungen verschiedener pyrogener Kieselsäuren, wie z. B. Aerosil 200 oder Aerosil 300 mit speziell vorbehandelten Aerosil-Typen.

Mischungen aus pyrogenen Kieselsäuren und Kieselsäure-Gelen, wie z. B. Aerosil 200 und/oder Aerosil 300 mit Kieselsäuregelen (z. B. die Typen Syloid 72 und Syloid 244 der Fa. Grace, Worms).

Mischungen aus pyrogenen Kieselsäuren und mineralischen Stoffen, wie z. B. Aerosil 200 und/oder Aerosil 300 mit Perliten, Kaolinit, Montmorillonit, Glimmer und/oder Calciumsulfat (Gips).

Mischungen aus pyrogenen Kieselsäuren und vermahlenen Gläsern oder glasartigen Stoffen, wie z. B. Aerosil 200 und/oder Aerosil 300 mit Glasmehl und/oder sehr feiner Glaswolle.

Mischungen aus pyrogenen Kieselsäuren und Rußen, Gasrußen, wie z. B. Aerosil 200 und/oder Aerosil 300 mit Furnace-Rußen, Flammrußen und/oder Gasrußen.

Mischungen aus pyrogenen Kieselsäuren und synthetischen oder natürlichen silikatischen Stoffen, wie z. B. Aerosil 200 und/oder Aerosil 300 mit synthetischen oder natürlichen Zeolithen oder Aluminiumsilikaten oder anderen silikatischen Stoffen (Calciumsilikat, Kieselgur, Extrusil).

Mischungen aus pyrogenen Kieselsäuren und synthetischen Abfallstoffen, wie z. B. Aerosil 200 und/oder Aerosil 300 mit Flugstäuben, Kraftwerksaschen, Aschen von Verbrennungsanlagen aller Art.

Mischungen aus pyrogenen Kieselsäuren und nichtmetallischen Elementen, wie z. B. Aerosil 200 und/oder Aerosil 300 mit Schwefel und/oder vermahlener Kohle.

Mischungen aus pyrogenen Kieselsäuren und Fasern, wie z. B. Aerosil 200 und/oder Aerosil 300 mit anorganischen oder organischen Fasern (Zellwolle oder feinen Kunststoff-Fasern).

Mischungen aus pyrogenen Kieselsäuren, wie z. B. Aerosil 200 und/oder Aerosil 300 und pulverförmigen Superabsorbern, wie z. B. Polyacrylaten.

Mischungen aus pyrogenen Kieselsäuren und pyrogenen Metalloxiden, wie z. B. Aerosil 200 und/oder Aerosil 300 mit pyrogenem Aluminiumoxid, Eisenoxid, Titandioxid.

Mischungen aus Rußen und Kieselsäure-Gelen, wie z. B Ruße oder Rußmischungen mit Kieselsäuregelen (z. B. die Typen Syloid 72 und Syloid 244 der Fa. Grace, Worms).

Mischungen aus Rußen und mineralischen Stoffen, wie z. B. Ruße oder Rußmischungen mit Montmorillonit und/oder Calciumsulfat (Gips).

Mischungen aus Rußen und synthetischen oder natürlichen silikatischen Stoffen, wie z. B. Ruße oder Rußmischungen mit synthetischen oder natürlichen Zeolithen oder Aluminiumsilikaten oder anderen silikatischen Stoffen (Calciumsilikat, Kieselgur, Extrusil).

Mischungen auf Rußen und pulverförmigen Superabsorbern wie z. B. Polyacrylaten.

Mischungen aus Rußen und pyrogenen Metalloxiden, wie z. B. Ruße oder Rußmischungen mit pyrogenem Aluminiumoxid, Eisenoxid, Titandioxid.

Zeolithe (zeolithische Molekularsiebe), wie z. B. Zeolith A, Zeolith X, Zeolith Y, vorbehandelte Zeolithe.

Mischungen aus verschiedenen Zeolithen, wie z. B. Zeolith X mit Zeolith Y.

Mischungen aus Zeolithen und Kieselsäure-Gelen, wie z. B. Zeolithe oder Zeolithmischungen mit Kieselsäuregelen (z. B. die Typen Syloid 72 und Syloid 244 der Fa. Grace, Worms)

Mischungen aus Zeolithen und mineralischen Stoffen, wie z. B. Zeolithe oder Zeolithmischungen mit Perliten, Kaolinit, Montmorillonit, Glimmer und/oder Calciumsulfat (Gips).

Mischungen aus Zeolithen und vermahlenen Gläsern oder glasartigen Stoffen, wie z. B. Zeolithe oder Zeolithmischungen mit Glasmehl und/oder sehr feiner Glaswolle.

Mischungen aus Zeolithen und synthetischen oder natürlichen silikatischen Stoffen, wie z. B. Zeolithe oder Zeolithmischungen mit synthetischen Aluminiumsilikaten oder anderen silikatischen Stoffen (Calciumsilikat, Kieselgur, Extrusil).

Mischungen aus Zeolithen und synthetischen Abfallstoffen, wie z. B. Zeolithe oder Zeolithmischungen mit Flugstäuben, Kraftwerksaschen, Aschen von Verbrennungsanlagen aller Art.

Mischungen aus Zeolithen und nichtmetallischen Elementen, wie z. B. Zeolithe oder Zeolithmischungen mit Schwefel und/oder vermahlener Kohle.

Mischungen aus Zeolithen und Fasern, wie z. B. Zeolithe oder Zeolithmischungen mit anorganischen oder organischen Fasern (Zellwolle oder feine Kunststoff-Fasern).

Mischungen aus Zeolithen und pulverförmigen Superabsorbern, wie z. B. Polyacrylaten.

Mischungen aus Zeolithen und pyrogenen Metalloxiden, wie z. B. Zeolithe oder Zeolithmischungen mit pyrogenem Aluminiumoxid, Eisenoxid, Titandioxid.

Kieselgele, wie z. B. Syloid 72 (Fa. Grace, Worms), Syloid 244 (Fa. Grace, Worms).

Mischungen aus unterschiedlichen Kieselsäuregelen, wie z. B. Syloid 72 mit Syloid 244 (Fa. Grace, Worms), unterschiedlich vorbehandelte Kieselsäuregele.

Mischungen aus Kieselgelen und mineralischen Stoffen, wie z. B. Kieselgele oder Kieselgelmischungen mit Perliten, Kaolinit, Montmorillonit, Glimmer und/oder Calciumsulfat (Gips).

Mischungen aus Kieselgelen und vermahlenen Gläsern oder glasartigen Stoffen, wie z. B. Kieselgele oder, Kieselgelmischungen mit Glasmehl und/oder sehr feiner Glaswolle.

Mischungen aus Kieselgelen und synthetischen oder natürlichen silikatischen Stoffen, wie z. B. Kieselgele oder Kieselgelmischungen mit synthetischen Aluminiumsilikaten oder anderen silikatischen Stoffen (Calciumsilikat, Kieselgur, Extrusil).

Mischungen aus Kieselgelen und synthetischen Abfallstoffen, wie z. B. Kieselgele oder Kieselgelmischungen mit Flugstäuben, Kraftwerksaschen, Aschen von Verbrennungsanlagen aller Art.

Mischungen aus Kieselgelen und nichtmetallischen Elementen, wie z. B. Kieselgele oder Kieselgelmischungen mit Schwefel und/oder vermahlener Kohle.

Mischungen aus Kieselgelen und Fasern, wie z. B. Kieselgele oder Kieselgelmischungen mit anorganischen oder organischen Fasern (Zellwolle oder feine Kunststoff-Fasern).

Mischungen aus Kieselgelen und pulverförmigen Superabsorbern, wie z. B. Polyacrylaten.

Mischungen aus Kieselgelen und pyrogenen Metalloxiden, wie z. B. Kieselgele oder Kieselgelmischungen mit pyrogenem Aluminiumoxid, Eisenoxid, Titandioxid.

Mischungen aus unterschiedlichen Aluminiumsilikaten, wie z. B. verschiedene Aluminiumsilikat-Typen, unterschiedlich vorbehandelte Aluminiumsilikate.

Mischungen aus Aluminiumsilikaten und mineralischen Stoffen, wie z. B. Aluminiumsilikate oder Aluminiumsilikatmischungen mit Perliten, Kaolinit, Montmorillonit, Glimmer und/oder Calciumsulfat (Gips).

Mischungen aus Aluminiumsilikaten und vermahlenen Gläsern oder glasartigen Stoffen, wie z. B. Aluminiumsilikate oder Aluminiumsilikatmischungen mit Glasmehl und/oder sehr feiner Glaswolle.

Mischungen aus Aluminiumsilikaten und synthetischen oder natürlichen silikatischen Stoffen, wie z. B. Aluminiumsilikate oder Aluminiumsilikatmischungen mit anderen silikatischen Stoffen (Calciumsilikat, Kieselgur, Extrusil).

Mischungen aus Aluminiumsilikaten und synthetischen Abfallstoffen, wie z. B. Aluminiumsilikate oder Aluminiumsilikatmischungen mit Flugstäuben, Kraftwerksaschen, Aschen von Verbrennungsanlagen aller Art.

Mischungen aus Aluminiumsilikaten und nichtmetallischen Elementen, wie z. B. Aluminiumsilikate oder Aluminiumsilikatmischungen mit Schwefel und/oder vermahlener Kohle.

Mischungen aus Aluminiumsilikaten und Fasern, wie z. B. Aluminiumsilikate oder Aluminiumsilikatmischungen mit anorganischen oder organischen Fasern (Zellwolle oder feine Kunststoff-Fasern aller Art).

Mischungen aus Aluminiumsilikaten und pulverförmigen Superabsorbern, wie z. B. Polyacrylaten.

Mischungen aus Aluminiumsilikaten und pyrogenen Metalloxiden, wie z. B. Aluminiumsilikate oder Aluminiumsilikatmischungen mit pyrogenem Aluminiumoxid, Eisenoxid, Titandioxid.

Metalloxide (pyrogen oder gefällt), wie z. B. Aluminiumoxid, Eisenoxide, Titandioxid, Zirkondioxid.

Mischungen aus unterschiedlichen Metalloxiden (pyrogen oder gefällt), wie z. B. Aluminiumoxid mit verschiedenen Eisenoxiden, Aluminiumoxid mit Titandioxid, Titandioxid mit verschiedenen Eisenoxiden.

Mischungen aus Metalloxiden (pyrogen oder gefällt) und mineralischen Stoffen, wie z. B. Aluminiumoxid, verschiedene Eisenoxide, Titandioxid und/oder Zirkondioxid mit Perliten, Kaolinit, Montmorillonit, Glimmer und/oder Calciumsulfat (Gips).

Mischungen aus Metalloxiden (pyrogen oder gefällt) und vermahlenen Gläsern oder glasartigen Stoffen, wie z. B. Aluminiumoxid, verschiedene Eisenoxide, Titandioxid und/oder Zirkondioxid mit Glasmehl und/oder sehr feiner Glaswolle.

Mischungen aus Metalloxiden (pyrogen oder gefällt) und synthetischen oder natürlichen silikatischen Stoffen, wie z. B. Aluminiumoxid, verschiedene Eisenoxide, Titandioxid und/oder Zirkondioxid mit silikatischen Stoffen (Calciumsilikat, Kieselgur, Extrusil).

Mischungen aus Metalloxiden (pyrogen oder gefällt) und synthetischen Abfallstoffen, wie z. B. Aluminiumoxid, verschiedene Eisenoxide, Titandioxid und/oder Zirkondioxid mit Flugstäuben, Kraftwerksaschen, Aschen von Verbrennungsanlagen aller Art.

Mischungen aus Metalloxiden (pyrogen oder gefällt) und nichtmetallischen Elementen, wie z. B. Aluminiumoxid, verschiedene Eisenoxide, Titandioxid und/oder Zirkondioxid mit Schwefel und/oder vermahlener Kohle.

Mischungen aus Metalloxiden (pyrogen oder gefällt) und Fasern, wie z. B. Aluminiumoxide, verschiedene Eisenoxide, Titandioxid und/oder Zirkondioxid mit anorganischen oder organischen Fasern (Zellwolle oder feine Kunststoff-Fasern aller Art).

Mischungen aus Metalloxiden wie z. B. Aluminiumoxide, verschiedene Eisenoxide, Titanoxid und/oder Zirkonoxid (pyrogen oder gefällt) und Superabsorbern wie z. B. Polyacrylaten.

Als gefällte Kieselsäuren können weiterhin eingesetzt werden:

HISIL T 600, HISIL T 690 der Fa. PPG

Tixosil 333 der Fa. Rhône-Poulenc

Hoesch SM 614 der Fa. AKZO

Zeothix 265 und Zeothix 177 der Fa. Huber

Die erfindungsgemäß einsetzbaren Umhüllungen aus zwei Teilen mit asymmetrischen Aufbau können zum einen im Bereich der metallfreien und gemuldeten (tiefgezogenen) Umhüllung eine Wasserdampfdurchlässigkeit von 0,02 bis 0,2 g/m²/d bei 23 °C und 85 % relativer Feuchte und Gasdurchlässigkeiten für $N_2$, $O_2$ und $CO_2$ in der Summe 0,05 bis 0,5 cm³/m²/d/bar und zum anderen im Bereich des metallhaltigen und planen Deckels eine Wasserdampfdurchlässigkeit von 0 bis 0,2 g/m²/d bei 23 °C und 85 % relativer Feucht und Gasdurchlässigkeiten für $N_2$, $C_2$ und $CO_2$ von in der Summe 0 bis 0,5 cm³/m²/d/bar bei 23 °C aufweisen. Die Gasdurchlässigkeiten sind so zu bemessen, daß der Innendruck im Wärmedämmformkörper bis zum Lebensdauer-Ende 20 mbar nicht überschreitet. Da die Gasdurchlässigkeiten gegenüber der Wasserdampfdurchlässigkeit um etwa den Faktor 1000 niedriger liegen, ist die maximale Lebensdauer des Wärmedämmformkörpers erreicht, wenn eine weitere Wasserdampfaufnahme durch den Füllstoff nicht mehr möglich ist oder bei einer weiteren Wasserdampfaufnahme die Wärmeleitfähigkeit stark ansteigt.

Die erfindungsgemäß eingesetzte metallfreie Umhüllung ist eine Mehrschichtenfolie, die folgendermaßen aufgebaut ist:

LLPDE     lineares Polyäthylen

HV         Haftvermittler

EVOH      Ethylen-Vinylalkohol-Copolymerisat

HV         Haftvermittler

LLPDE     lineares Polyäthylen

PVDC      Polyvinylidenchlorid

Insbesondere kann die Mehrschichtenfolie folgendermaßen aufgebaut sein (Beispiel 1):

LLPDPE   lienares Polyäthylen Dicke 65 μm spezifisches Gewicht 0,92 g/cm³

HV         Haftvermittler, Dicke 5 μm, spezifisches Gewicht 0,92 g/cm³

EVOH      Ethylen-Vinylakohol Copolymerisat Dicke 10 μm, spezifisches Gewicht 1,17 g/cm³

HV         Haftvermittler, Dicke 5 μm, spezifisches Gewicht 0,92 g/cm³

LLDPE     lineares Polyäthylen Dicke 65 μm spezifisches Gewicht 0,92 g/cm³

PVDC      Polyvinylidenchlorid, Dicke 12 μm, spezifisches Gewicht 1,35 g/cm³

Die erfindungsgemäß eingesetzte metallhaltige Umhüllung ("Deckel") ist eine Mehrschichtenfolie, die folgendermaßen aufgebaut ist:

Polyester

HV

Al-Folie

HV

Polyethylen

Insbesondere kann die Mehrschichtenfolie (vgl H. Hinksen, Kunststoffe 77 (1987/5) folgendermaßen aufgebaut sein (Beispiel 2):

PETP       Polyethylenterephtalat Dicke 12 μm spezifisches Gewicht 1,37 g/cm³

HV         Haftvermittler Dicke 5 μm spezifisches Gewicht 0,92 g/cm³

Al-Folie    Aluminium-Folie Dicke 9 μm spezifisches Gewicht

HV         Haftvermittler Dicke 5 μm spezifisches Gewicht 0,92 g/cm³

PE         Polyethylen Dicke 75 μm spezifisches Gewicht 0,92 g/m³

Geeignet für die erfindungsgemäßen Formkörper sind feinverteilte, pulverförmige bzw. faserförmige Stoffe, die eine Wasseraufnahmekapazität von 4 bis 50 Gew.-% (bei 23 °C und 85 % relativer Feuchte) haben. Die Wassermenge, die die feinverteilten Stoffe bei der Verwendung im erfindungsgemäßen Formkörper aufnehmen dürfen, ist in der Regel kleiner als deren Wasseraufnahmekapazität. Der Grenzwert für die zulässige Wasseraufnahme im Wärmedämmkörper entspricht der Menge an Wasser, bei der die Wärmeleitfähigkeit des Formkörpers um nicht mehr als 25 % gegenüber einem trockenen Formkörper zugenommen hat. Zur Herstellung eines trockenen Formkörpers wird ein feinverteilter Stoff verwendet, der gemäß DIN 55 921 getrocknet wurde. Bevorzugt liegt die entsprechende Wassermenge, die ein Wärmedämmkörper aufnehmen darf, zwischen 2 und 15 Gew.-%, bezogen auf den trockenen Füllstoff.

Die erfindungsgemäßen Wärmedämmkörper weisen gegenüber den Wärmedämmkörpern gemäß Stand der Technik den Vorteil auf, daß durch die Verwendung metallfreier Umhüllungsfolien oder Umhüllungen mit asymmetrischem Aufbau die Wärmeleitfähigkeit im Kantenbereich der Wärmedämmkörper so niedrig ist, daß die sehr gute Gesamt-Wärmeleitfähigkeit der Formkörper von etwa 8 mW/(m.K) (gemessen nach dem absoluten Einplattenverfahren mit Schutzring an Wärmedämmstoffen, hergestellt aus der Fällungskieselsäure FK 500 LS) nicht oder nur unwesentlich beeinträchtigt wird.

Somit lassen sich aus den erfindungsgemäßen Wärmedämmkörpern beispielsweise Dämmschichten für die Isolation von Kühl- und Gefrierschränken herstellen.

In der folgenden Tabelle sind Beispiele für die Wärmeleitfähigkeiten von Wärmedämmkörpern aufgeführt, die mit metallfreier Umhüllungsfolie oder Umhüllungen mit asymmetrischem Aufbau gefertigt wurden. Die Wärmeleitfähigkeiten wurden jeweils nach dem absoluten Einplattenverfahren mit Schutzring und nach einem Verfahren ohne Schutzringtechnik gemessen. Im Verfahren ohne Schutzringtechnik werden Wärmeströme, die durch die Umhüllungsfolie von einer Seite eines plattenförmigen Wärmedämmkörpers zur anderen fließen, nicht kompensiert und man erhält einen Wert für die Gesamt-Wärmeleitfähigkeit des Wärmedämmkörpers (abhängig von Geometrie und Größe des Formkörpers).

Füllgut:          FK 500 LS
Abmessungen:   250 mm x 250 mm x 20 mm

Wärmeleitfähigkeiten verschiedener Wärmedämmkörper als Funktion der Meßmethode (mittlere Temperatur: etwa 0°C)

| Wärmedämmkörper-Art | Meßmethode zur Bestimmung der Wärmeleitfähigkeit | |
|---|---|---|
| | gemäß absoluten Einplattenverfahren mit Schutzring | gemäß Einplattenverfahren ohne Schutzring |
| Wärmedämmkörper mit metallfreier Umhüllung oder Umhüllungen gemäß Erfindung mit asymmetrischem Aufbau | 8 mW/m/K | etwa 9 mW/m/K |

Die erfindungsgemäß eingesetzten pulverförmigen bzw. faserförmigen Stoffe sind beispielsweise durch die folgenden physikalisch-chemischen Kenndaten gemäß Tabellen 1, 2, 3 und 4 gekennzeichnet:

Tabelle 1

| | | AEROSIL 200 | AEROSIL 300 | AEROSIL 380 | AEROSIL OX 50 | AEROSIL COK 84 |
|---|---|---|---|---|---|---|
| Oberfläche nach BET | $m^2/g$ | 200±25 | 300±30 | 300±30 | 50±15 | 170±30 |
| Mittlere Größe der Primärteilchen | Nanometer | 12 | 7 | 7 | 40 | - |
| Stampfdichte 1) | g/l | ca. 50 | ca. 50 | ca. 50 | ca. 130 | ca. 50 |
| Trocknungsverlust 2) (2h bei 105 °C) bei Verlassen des Werkes | % | < 1,5 | < 1,5 | < 1,5 | < 1,5 | < 1,5 |
| Glühverlust 2) 7) (2h bei 1000°C) | % | < 1 | < 2 | < 2,5 | < 1 | < 1 |
| pH-Wert 3) (in 4%iger wäßriger Dispersion) | | 3,6-4,3 | 3,6-4,3 | 3,6-4,3 | 3,8-4,5 | 3,6-4,3 |
| $SiO_2$ 5) | % | > 99,8 | > 99,8 | > 99,8 | > 99,8 | 82-86 |
| $Al_2O_3$ 5) | % | < 0,05 | < 0,05 | < 0,05 | < 0,08 | 14-18 |
| $Fe_2O_3$ 5) | % | < 0,003 | < 0,003 | < 0,003 | < 0,01 | < 0,1 |
| $TiO_2$ 5) | % | < 0,03 | < 0,03 | < 0,03 | < 0,03 | < 0,03 |
| HCl 5) 10) | % | < 0,025 | < 0,025 | < 0,025 | < 0,01 | < 0,1 |
| Siebrückstand 4) nach Mocker (45 µm) | % | < 0,05 | < 0,05 | < 0,05 | < 0,1 | < 0,1 |

EP 0 463 311 B1

1) nach DIN 52 194

2) nach DIN 55 921

3) nach DIN 53 200

4) nach DIN 53 580

5) bezogen auf die 2 Stunden bei 1000 °C geglühte Substanz

7) bezogen auf die 2 Stunden bei 105 °C getrocknete Substanz

10) HCl-Gehalt ist Bestandteil des Glühverlustes

Tabelle 2

|  |  | EXTRUSIL |
|---|---|---|
| Oberfläche nach BET   1) | $m^2/g$ | 35 |
| Mittlere Größe der Agglomerate | μm | 5   8) |
| Stampfdichte   2) | g/l | 300 |
| Trocknungsverlust (2h bei 105 °C) bei Verlassen des Lieferwerkes   3) | % | 6 |
| Glühverlust (2h bei 1000°C) 4) 10) | % | 7 |
| pH-Wert (in 5%iger wäßriger Dispersion)   5) |  | 10 |
| DBP-Absorption   6)   10) | g/100 g | 160 |
| $SiO_2$   11) | % | 91 |
| $Al_2O_3$   11) | % | 0,2 |
| CaO   11) | % | 6 |
| $Na_2O$   11) | % | 2 |
| $Fe_2O_3$   11) | % | 0,03 |
| $SO_3$   11) | % | – |
| Cl-   11) | % | 0,8 |
| Siebrückstand (nach Mocker, 45 μm)   7) | % | 0,2 |

1) nach DIN 66 131

2) nach DIN ISO 787/XI, JIS K 5101/78 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

8) Coulter Counter, 100 μm Kapillare

10) bezogen auf die 2 Stunden bei 105 °C getrocknete Substanz

11) bezogen auf die 2 Stunden bei 1000°C geglühte Substanz

Tabelle 3

|  |  | FK 320 DS | FK 500 LS | SIPERNAT 22 LS |
|---|---|---|---|---|
| Oberfläche nach BET 1) | $m^2/g$ | 170 | 450 | 190 |
| Mittlere Größe der Agglomerate | μm | 4 9) | 3,5 9) | 4,5 9) |
| Stampfdichte 2) | g/l | 80 | 80 | 80 |
| Trocknungsverlust (2h bei 105°C) bei Verlassen des Lieferwerkes 3) | % | 6 | 3 | 6 |
| Glühverlust (2h bei 1000 °C) 4) 10) | % | 5 | 5 | 5 |
| pH-Wert (in 5 %iger wäßriger Dispersion) 5) |  | 6,3 | 6,5 | 6,3 |
| DBP-Absorption 6) 10) | g/100 g | 230 | 330 | 270 |
| $SiO_2$ 11) | % | 98 | 98,5 | 98 |
| $Na_2O$ 11) | % | 1 | 0,6 | 1 |
| $Fe_2O_3$ 11) | % | 0,03 | 0,03 | 0,03 |
| $SO_3$ 11) | % | 0,8 | 0,7 | 0,8 |
| Siebrückstand (nach Mocker, 45 μm) 7) | % | 0,01 | 0,02 | 0,1 |

1) nach DIN 66 131

2) nach DIN ISO 787/XI, JIS K 5101/18 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

9) Coulter Counter, 50 µm Kapillare

10) bezogen auf die 2 Stunden bei 105 °C getrocknete Substanz

11) bezogen auf die 2 Stunden bei 1000°C geglühte Substanz

Tabelle 4

| Hersteller | | Hoesch | Huber | | PPG | | Rhone-Poulenc | Grace | |
|---|---|---|---|---|---|---|---|---|---|
| Typ | | SM 614 | Zeothix 265 | Zeothix 177 | HiSil T 600 | HiSil T 690 | Tixosil 333 | Syloid 72 | Syloid 244 |
| SiO$_2$-Gehalt 1) | (%) | 87 | - | - | - | - | 97 | 99 | 99,5 |
| Trockenverlust 2) | (%) | 6 | 7 | - | 1-2 | 10 | - | 1 | 4 |
| Glühverlust 2) | (%) | 9 | - | - | - | - | ± 11 | 5 | 7 |
| pH-Wert 3) | | 6 | 7 | 7 | 3,5 | 7 | 6,8 | 6 | 6 |
| BET-Oberfläche | (m$^2$/g) | - | 260 | 175 | 200 | 150 | 300 | - | - |
| mittlere Teilchengröße 4) | (μm) | 8 | 1,7 | 1,5 | 0,015 | 0,021 | 2,3 | 4 | 2 |
| Öl-Absorption | (ml/100g) | - | 220 | 235 | - | - | 370 | - | - |
| Naßsiebrückstand 5) | (%) | - | - | - | - | - | - | 0,02 | 0,02 |
| Porenvolumen | (ml/g) | - | - | - | - | - | - | 1,2 | 1,6 |
| Typ | | FK 6) | FK 6) | FK 6) | FK 6) | FK 6) | FK 6) | KG 7) | KG 7) |

1) bezogen auf bei 1000 °C geglühte Substanz
2) DIN 55 921
3) DIN 53 200
4) Coulter Counter 100 μm Kapillare
5) nach Mocker
6) Fällungskieselsäure
7) Kieselgel

Im folgenden werden Beispiele dafür gegeben, welchen Einfluß der Wassergehalt eines Wärmedämmkörpers auf die Wärmeleitfähigkeit hat. Die Messung erfolgt nach dem absoluten Einplattenverfahren mit Schutzringtechnik nach Kohlrausch (Kalte Seite: - 20 °C; warme Seite + 20C °C).

13

1. FK 500 LS

Einfluß des Feuchtegehaltes auf die Wärmeleitfähigkeit
Preßdichte: 200 g/l
Feuchtegehalt eingestellt mit Mikrowelle.

| Feuchtegehalt* (%) | Wärmeleitfähigkeit (mW/m/K) | Innendruck** (mbar) |
|---|---|---|
| 0,3 | 8,8 | < 4 |
| 0,5 | 8,9 | < 4 |
| 1,3 | 9,4 | < 4 |
| 2,3 | 9,1 | < 4 |
| 4,1 | 9,4 | < 4 |
| 7,0 | 11,0 | ca. 10 |
| 9,6 | 14,0 | ca. 20 |

\* Feuchtegehalt in Gew.-% bezogen auf die Trockensubstanz

\*\* Innendruck (Druck im Wärmedämmkörper) jeweils gemessen nach der Wärmeleitfähigkeitsmessung

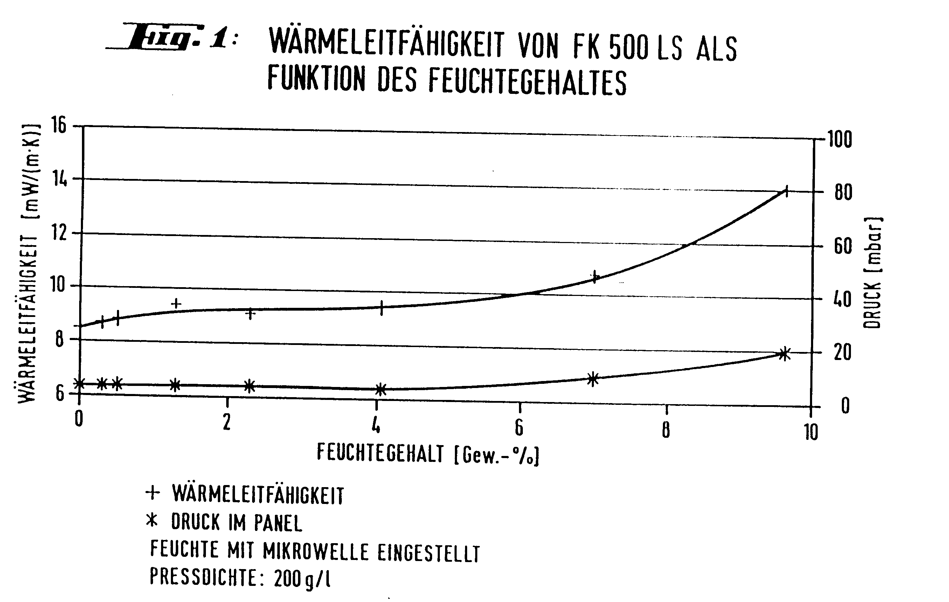

Diese Ergebnisse sind in der Figur 1 graphisch dargestellt.

2. FK 500 LS

Einfluß des Feuchtegehaltes auf die Wärmeleitfähigkeit
Preßdichte: 200 g/l
Einstellung des Feuchtegehalts durch Trocknen im Umlufttrockenschrank (105 - 110 °C)

| Feuchtegehalt[*] (%) | Wärmeleitfähigkeit (mW/m/K) | Innendruck[**] (mbar) |
|---|---|---|
| 0 | 9,5 | < 4 |
| 0,2 | 10,0 | < 4 |
| 0,5 | 10,5 | < 4 |
| 0,8 | 9,7 | < 4 |
| 1,0 | 10,0 | < 4 |
| 1,1 | 10,3 | < 4 |
| 2,1 | 9,7 | < 4 |
| 3,6 | 10,7 | < 4 |
| 4,0 | 9,8 | < 4 |
| 5,1 | 10,6 | < 4 |
| 7,0 | 11,0 | ca. 10 |
| 9,6 | 14,0 | ca. 20 |

[*] Feuchtegehalt in Gew.-% bezogen auf die Trockensubstanz

[**] Innendruck (Druck im Wärmedämmkörper) jeweils gemessen nach der Wärmeleitfähigkeitsmessung

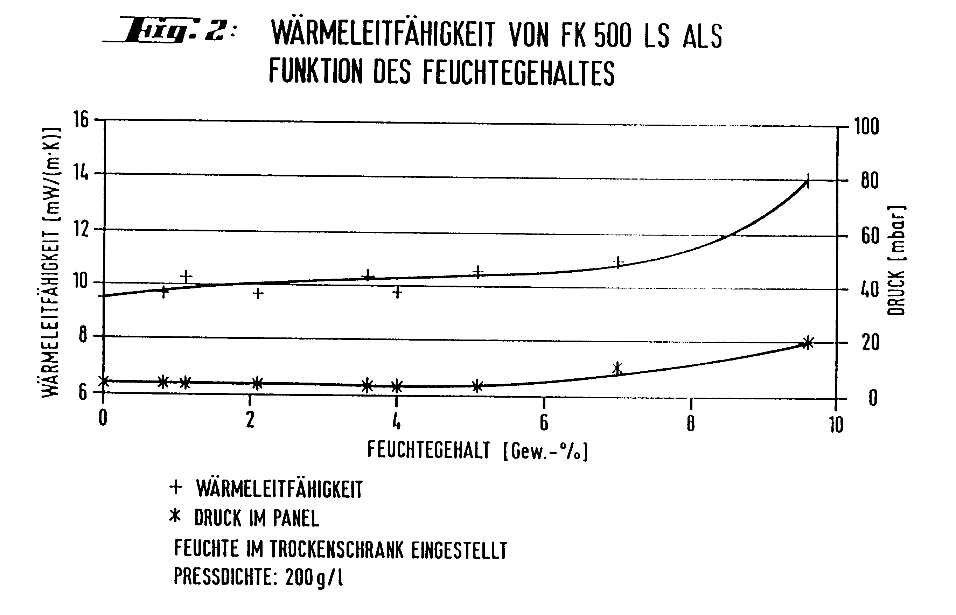

Diese Ergebnisse sind in der Figur 2 graphisch dargestellt.

3. FK 320 DS

Einfluß des Feuchtegehaltes auf die Wärmeleitfähigkeit
Preßdichte: 210 g/l
Einstellung des Feuchtegehalts durch Trocknen im Umlufttrockenschrank (105 - 110 °C)

| Feuchtegehalt* (%) | Wärmeleitfähigkeit (mW/m/K) | Innendruck** (mbar) |
|---|---|---|
| 0 | 8,6 | < 4 |
| 0,6 | 9,1 | < 4 |
| 1,5 | 9,2 | < 4 |
| 2,5 | 9,5 | < 4 |
| 3,4 | 9,3 | < 4 |
| 4,5 | 9,7 | ca. 8 |
| 5,5 | 9,7 | ca. 10 |
| 7,4 | 10,8 | ca. 15 |

\* Feuchtegehalt in Gew.-% bezogen auf die Trockensubstanz

\*\* Innendruck (Druck im Wärmedämmkörper) jeweils gemessen nach der Wärmeleitfähigkeitsmessung

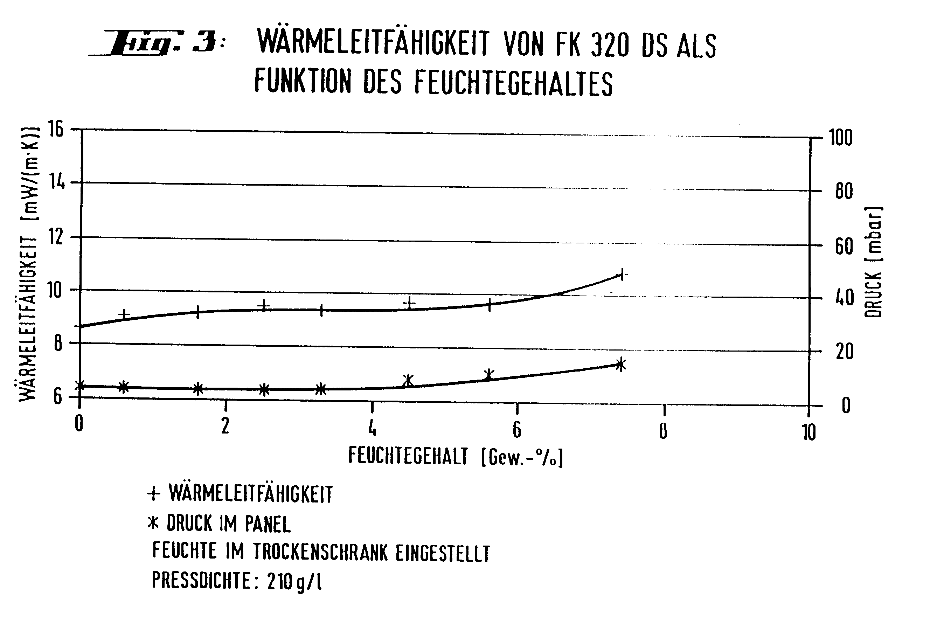

Diese Ergebnisse sind in der Figur 3 graphisch dargestellt.

Da infolge eindiffundierender Gase der Innendruck im Wärmedämm-Formkörper allmählich ansteigt (die Summe der Gasdurchlässigkeiten der Hüllfolien liegen im Bereich zwischen 0 bis 0,5 cm³/(m²·d·bar) werden Beispiele gegeben, welchen Einfluß der Druck im Formkörper auf die Wärmeleitfähigkeit des Dämmkörpers hat.

1. FK 500 LS

Einfluß des Druckes auf die Wärmeleitfähigkeit Preßdichte: 200 g/l

| Innendruck (mbar) | Wärmeleitfähigkeit (mW/(m·K)) |
|---|---|
| 2 | 8,1 |
| 5 | 8,2 |
| 10 | 9,2 |
| 20 | 10,1 |
| 50 | 12,9 |
| 100 | 16,1 |
| 200 | 20,0 |
| 450 | 25,8 |
| 1000 | 30,8 |

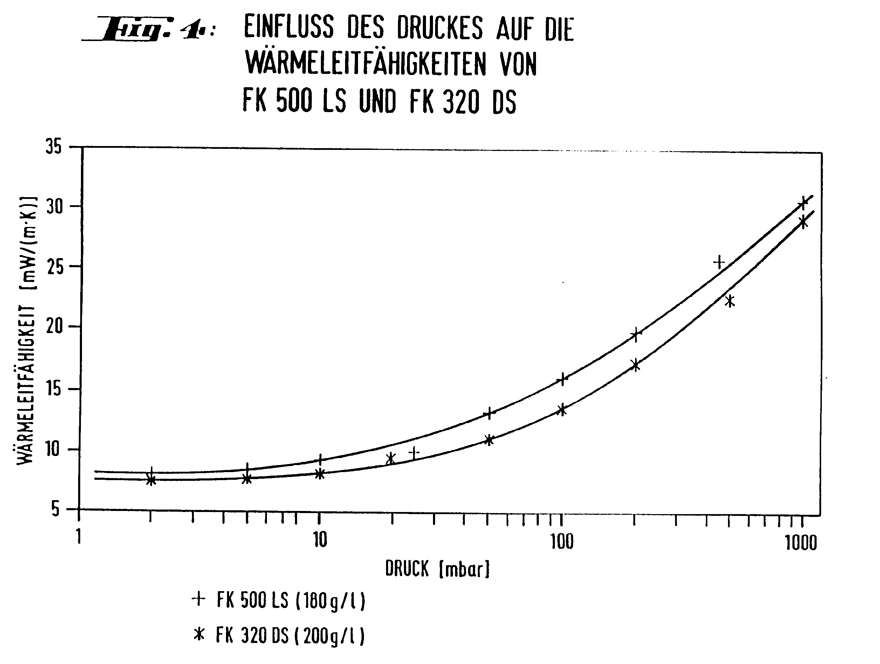

Die Ergebnisse sind in Figur 4 graphisch dargestellt.

EP 0 463 311 B1

## 2. FK 320 DA

Einfluß des Druckes auf die Wärmeleitfähigkeit Preßdichte: 210 g/l

| Innendruck (mbar) | Wärmeleitfähigkeit (mW/m/K) |
|---|---|
| 2 | 7,2 |
| 5 | 7,9 |
| 10 | 8,0 |
| 20 | 9,3 |
| 50 | 11,1 |
| 100 | 13,8 |
| 200 | 17,6 |
| 500 | 22,5 |
| 1000 | 29,5 |

Die Ergebnisse sind in Figur 4 graphisch dargestellt.

Beispiele für die Berechnung der Lebensdauer von Wärmedämmkörpern

Aus der graphischen Darstellung der Abhängigkeit der Wärmeleitfähigkeit vom Feuchtegehalt des jeweiligen Füllstoffes kann der Grenzwert für die Wasseraufnahme ermittelt werden.

Wärmedämmkörper mit Kieselsäure als Füllstoff und einem Feuchtegehalt entsprechend dem Grenzwert weisen immer noch gute Dämmeigenschaften auf. Bei einem höheren Feuchtegehalt nimmt sowohl die Wärmeleitfähigkeit wie auch der Innendruck (Druck im Wärmedämmkörper) zu. Die Folge ist ein allmähliches Abfallen der Isolationseigenschaften.

Aus den Figuren 1, 2 und 3 lassen sich die Feuchtegehalte für die Kieselsäuren FK 500 LS und FK 320 DS ermitteln, die zulässig sind, wenn sich mit der Wasseraufnahme die Wärmeleitfähigkeiten der Wärmedämmstoffe um maximal 25 % verschlechtern dürfen. Dabei wird von Kieselsäuren ausgegangen, die nach DIN 55 921 getrocknet wurden.

Ergebnisse:

FK 500 LS     Grenzwert bei Feuchtegehalt 7 %

FK 320 DS     Grenzwert bei Feuchtegehalt 6 %

Bei bekannter Kieselsäure-Einwaage und Wärmedämmkörperabmessungen berechnen sich diese Grenzwerte (maximal zulässige Wassermenge) gemäß der Gleichung:

$$\text{maximale Wassermenge (g)} = \frac{\text{Grenzwert(\%)}}{100\ (\%)} \times \text{Masse Kieselsäure}$$

1. FK 500 LS     Grenzwert: Feuchtegehalt 7 %

a) Preßdichte: 180 g/l (Abmessungen 100 x 50 x 2 cm)
Volumen:              10 l
Masse Kieselsäure:    1800 g
Max. Wassermenge:     126 g
b) Preßdichte: 200 g/l (Abmessungen 100 x 50 x 2 cm)
Volumen:              10 l
Masse Kieselsäure:    2000 g
Max. Wassermenge:     140 g

2. FK 320 DS     Grenzwert: Feuchtegehalt 6 %

a) Preßdichte: 200 g/l (Abmessungen 100 x 50 x 2 cm)

17

Volumen: 10 l
Masse Kieselsäure: 2000 g
Max. Wassermenge: 120 g
b) Preßdichte: 220 g/l (Abmessungen 100 x 50 x 2 cm)
Volumen: 10 l
Masse Kieselsäure: 2200 g
Max. Wassermenge: 132 g

Mit Hilfe der folgenden Gleichung läßt sich bei bekannter Folien-Wasserdampf-Durchlässigkeit aus dem Grenzwert die Lebensdauer von Wärmedämmkörpern abschätzen:

$$\text{Lebensdauer} \approx \frac{\text{Grenzwert (maximale Wasermenge)}}{\text{Austauschfläche} * \text{Wasserdampf} - \text{Durchlässigkeit}}$$

Dimensionen:
Grenzwert (maximale Wassermenge): (g)
Austauschfläche: $(m^2)$
Wasserdampf-Durchlässigkeit: $\dfrac{g}{m^2.d}$
Lebensdauer: (d)

Mit einer Umhüllungsfolie der Wasserdampf-Durchlässigkeit von 0,05 $\dfrac{g}{m^2.d}$ bei 23 °C; 85 % rel. Feuchte errechnet sich beispielsweise für einen Wärmedämmkörper, der unter Verwendung von FK 500 LS hergestellt wurde, die folgende Lebensdauer:

```
Füllstoffe:              FK 500 LS

Preßdichte:              180 g/l

Abmessungen:             100 cm x 50 cm x 2 cm

Grenzwert

(Feuchtegehalt): 7 Gew.-% (= 126 g)


Maximale Wassermenge:           126 g

Austauschfläche:                1,06 m²

Wasserdampfdurchlässigkeit: 0,05 g/m²/d

Lebensdauer      = 126 g . m² . d
                                       = 2377 d = 6,5 a
                   1,06 m² * 0,05

bei 23 ° C, 85 % relativer Feuchte
```

In der folgenden Tabelle sind Beispiele dafür zusammengestellt, welche Lebensdauer bei metallfreien und metallhaltigen Deckeln mit bekannten Folien (mit niedrigen Wasserdampf-Durchlässigkeiten) für Wärmedämmkörper mit den Fällungskieselsäuren FK 500 LS und FK 320 DS erreicht werden können.

Diese Berechnungen gelten zunächst für einen Wärmedämmkörper mit asymmetrischer aufgebauten Umhüllung. Bei der Verwendung eines methallhaltigen und planen Deckels ergibt sich folgende Zusammensetzung:

Maximale Wassermenge         :              126 g

Austauschfläche              :

   Mulde        :         $\approx$ 0,56 m$^2$

   Deckel       :         $\approx$ 0,50 m$^2$

Wasserdampfdurchlässigkeit:

   Mulde        :         0,05 g/m$^2$/d

   Deckel       :          0 g/m$^2$/d

$$\text{Lebensdauer} = \frac{126 m^2 \cdot d}{0,56 m^2 \cdot 0,05 g + 0,5 m^2 \cdot 0 g} = 4500 \ d = 12,5 \ a$$

Wärmedämmkörper-Lebensdauer in Abhängigkeit von den Wasserdampf-Durchlässigkeiten
unterschiedlicher Folien

FK 500 LS: maximal zulässiger Feuchtegehalt 7 %    Abmessungen: 100 cm x 50 cm x 2 cm
FK 320 DS: maximal zulässiger Feuchtegehalt 6 %    Austauschfläche: 1,06 m$^2$

| Folien-Typen | Wasserdampf-durchlässigkeit[*] $(g/m^2/Tag)$ | Lebensdauer FK 500 LS 180 g/l metallfrei | Deckel metallhaltig | Lebensdauer FK 500 LS 200 g/l metallfrei | Deckel metallhaltig | Lebensdauer FK 320 DS 200 g/l metallfrei | Deckel metallhaltig |
|---|---|---|---|---|---|---|---|
| Fa. Wolff-Walsrode: Combitherm XX 8/12 K 12 50 Folie auf Vinylbasis, biaxial gereckt, beidseitig PVDC lackiert / Polyethylen | 0,4 | 297 Tg | 563 Tg | 330 Tg | 625 Tg | 283 Tg | 536 Tg |
| 4 P Verpackungen Ronsberg: PVDC-beschichtete Kunststoffe PVC/PE/PVDC PVC/PVDE/PE PVC/PVDC | 0,15 | 2,2 J. | 4,2 J. | 2,4 J. | 4,6 J. | 2,1 J. | 4,0 J. |

[*] gemessen bei 23 °C und 85 % relativer Luftfeuchte

. . .

EP 0 463 311 B1

EP 0 463 311 B1

## Wärmedämmkörper-Lebensdauer in Abhängigkeit von den Wasserdampf-Durchlässigkeiten unterschiedlicher Folien

FK 500 LS: maximal zulässiger Feuchtegehalt 7 %  
FK 320 DS: maximal zulässiger Feuchtegehalt 6 %

Abmessungen: 100 cm x 50 cm x 2 cm  
Austauschfläche: 1,06 $m^2$

| Folien-Typen | Wasserdampf-[*] durchlässig-keit ($g/m^2$/Tag) | Lebensdauer FK 500 LS 180 g/l metallfrei | Deckel metall-haltig | Lebensdauer FK 500 LS 200 g/l metallfrei | Deckel metall-haltig | Lebensdauer FK 320 DS 200 g/l metallfrei | Deckel metall haltig |
|---|---|---|---|---|---|---|---|
| Folie gemäß Ausführungs-beispiel | 0,05 | 6,5 a | 12,5 | 7,2 a | 13,8 | 6,2 a | 12,0 |

[*] gemesen bei 23 °C und 85 % relativer Luftfeuchte

. . .

**Patentansprüche**

1. Formkörper, vorzugsweise plattenförmig, für die Verwendung als Wärmedämmung, hergestellt aus

a) einem feinverteilten, pulverförmigen bzw. faserförmigen Stoff, der eine Wasseraufnahmekapazität von 4 bis 50 Gew.-% bei 23 °C und 85 % relativer Feuchte hat,

b) einer Umhüllung aus zwei Teilen mit asymmetrischem Aufbau, die diesen feinverteilten, pulverförmigen bzw. faserförmigen Stoff enthält, wobei der erste Teil der Umhüllung eine metallfreie Mehrschichtenfolie ist, die folgendermaßen aufgebaut ist:

LLPDE      lineares Polyäthylen

HV      Haftvermittler

EVOH      Ethylen-Vinylalkohol-Copolymerisat

HV      Haftvermittler

LLPDE      lineares Polyäthylen

PVDC      Polyvinylidenchlorid

und derart durch Tiefziehen gemuldet ist, daß diese Mulde durch den gegebenenfalls getrockneten und gegebenenfalls verpreßten pulverförmigen bzw. faserförmigen Stoff vollständig ausgefüllt wird, und der zweite Teil eine metallhaltige Mehrschichtenfolie ist, die folgendemaßen aufgebaut ist:

Polyester

HV

Al-Folie

HV

Polyethylen

und plan sein kann und mit der Mulde so verbunden ist, daß ein gas- und wasserdampfdichter Abschluß gewährleistet ist, und beide Teile dabei Wasserdampfdurchlässigkeiten zwischen 0 und 0,2 $g/m^2/d$ bei 23 °C und 85 % relativer Feuchte und Gasdurchlässigkeiten für $N_2$, $O_2$ und $CO_2$ von in der Summe 0 bis 0,5 $cm^3/m^2/d/bar$ bei 23 °C aufweisen, mit der Eigenschaft, Wasser bis zu einer Menge von 2 bis 15 Gew.-% aufzunehmen, ohne daß dabei seine Wärmeleitfähigkeit um mehr als 25 % verschlechtert wird.

2. Formkörper gemäß Anspruch 1, dadurch gekennzeichnet, daß der pulverförmige bzw. faserförmige Stoff in einer mikroporösen Umhüllung in die zweiteilige Umhüllung mit asymmetrischem Aufbau eingebracht wurde.

3. Verfahren zur Herstellung eines Formkörpers zur Wärmedämmung nach Anspruch 1, dadurch gekennzeichnet, daß man

a) gegebenenfalls einen feinverteilten, pulverförmigen bzw. faserförmigen Stoff, der eine Wasseraufnahmekapazität von 4 bis 50 Gew.-% bei 23 °C und 85 % relativer Feuchte hat, unter Bedingungen trocknet, die für das Austreiben des Oberflächenwassers ausreichen,

b) den pulverförmigen bzw. faserförmigen Stoff gegebenenfalls in eine Form verpreßt, wobei gegebenenfalls eine Preßform verwendet werden kann,

c) den gegebenenfalls getrockneten und gegebenenfalls verpreßten pulverförmigen bzw. faserförmigen Stoff in den gemuldeten (tiefgezogenen) metallfreien Teil der Umhüllung, die eine Wasserdampfdurchlässigkeit von 0,02 bis 0,2 $g/m^2/d$ bei 23 °C und 85 % relativer Feuchte und Gasdurchlässigkeiten für $N_2$, $O_2$ und $Co_2$ von in der Summe 0,05 bis 0,5 $cm^3/m^2/d/bar$ bei 23 °C aufweist, einbringt,

d) den gegebenenfalls getrockneten und gegebenenfalls verpreßten pulverförmigen bzw. faserförmigen Stoff im gemuldetem Teil der Umhüllung auf einen Druck zwischen 0,1 und 1 mbar evakuiert.

e) im Vakuum den zweiten metallfreien oder metallhaltigen und planen Teil der Umhüllung, die eine Wasserdampfdurchlässigkeit von 0 bis 0,2 $g/m^2/d$ bei 23 °C und 85 % relativer Feuchte und Gasdurchlässigkeiten für $N_2$, $O_2$, und $CO_2$ von in der Summe 0 bis 0,5 $cm^3/m^2/d/bar$ bei 23 °C aufweist, mit dem ersten metallfreien Umhüllungsteil derart verbindet, daß das Vakuum im Innern der Umhüllung erhalten bleibt und ein - soweit möglich - gas- und wasserdampfdichter Abschluß entsteht.

4. Verfahren nach Anspruch 3, dadurch gekennzeichnet, daß man den pulverförmigen bzw. faserförmigen Stoff in einer mikroporösen Umhüllung trocknet.

5. Verfahren nach Anspruch 3, dadurch gekennzeichnet, daß man den pulverförmigen bzw. faserförmigen Stoff in einer mikroporösen Umhüllung verpreßt und gegebenenfalls danach trocknet.

6. Verwendung eines Formkörpers gemäß Anspruch 1 als Lager-, Verpackungs- und/oder Transportbehälter für temperaturempfindliche Güter.

7. Verwendung eines oder mehrerer Formkörper gemäß Anspruch 1 zur Wärmedämmung von Kühl- oder Gefrierschränken.

## Claims

1. A moulding, preferably in the form of a panel, for use as heat insulation produced from
   a) a fine-particle, powder-form or fibrous material which has a water absorption capacity of 4 to 50% by weight at 23°C/85% relative humidity,
   b) an asymmetrical envelope of two parts which contains the fine-particle, powder-form or fibrous material, the first part of the envelope being a metal-free multilayer film having the following composition:
   | | |
   |---|---|
   | LLPDE | linear polyethylene |
   | CA | coupling agent |
   | EVOH | ethylene/vinyl alcohol copolymer |
   | CA | coupling agent |
   | LLPDE | linear polyethylene |
   | PVDC | polyvinylidene chloride |

   and being recessed by thermoforming in such a way that the resulting trough is completely filled by the optionally dried and optionally compressed powder-form or fibrous material and the second part being a metal-containing multilayer film having the following composition:
   polyester
   CA
   Al foil
   CA
   polyethylene
   which may be flat and joined to the trough in such a way that a closure impermeable to gases and water vapour is guaranteed and both parts having water vapour permeabilities of 0 to 0.2 $g/m^2/d$ at 23°C/85% relative humidity and gas permeabilities for $N_2$, $O_2$ and $CO_2$ of, in all, 0 to 0.5 $cm^3/m^2/d/bar$ at 23°C, with the capacity to absorb water in a quantity of 2 to 15% by weight without losing more than 25% of its thermal conductivity.

2. A moulding as claimed in claim 1, characterized in that the powder-form or fibrous material in a microporous envelope is introduced into the asymmetrical two-part envelope.

3. A process for the production of the heat insulation moulding claimed in claim 1, comprising the steps of
   a) optionally drying a fine-particle, powder-form or fibrous material, which has a water absorption capacity of 4 to 50% by weight (at 23°C/85% relative humidity) under conditions which are sufficient to remove the surface water,
   b) optionally press-moulding the powder-form or fibrous material, optionally using a compression mould,
   c) introducing the optionally dried and optionally press-moulded powder-form or fibrous material into the recessed (thermoformed) metal-free part of the envelope which has a permeability to water vapour of 0.02 to 0.2 $g/m^2/d$ at 23°C/85% relative humidity and gas permeabilities for $N_2$, $O_2$ and $CO_2$ of, in all, 0.05 to 0.5 $cm^3/m^2/d/bar$ at 23°C,
   d) evacuating the optionally dried and optionally press-moulded powder-form or fibrous material in the recessed part of the envelope to a pressure of 0.1 to 1 mbar,
   e) joining the second metal-free or metal-containing and flat part of the envelope, which has a permeability to water vapour of 0 to 0.2 $g/m^2/d$ at 23°C/85% relative humidity and gas permeabilities for $N_2$, $O_2$ and $CO_2$ of, in all, 0 to 0.5 $cm^3/m^2/d/bar$ at 23°C, *in vacuo* to the first metal-free part of the envelope in such a way that the vacuum is maintained in the interior of the envelope and a closure impermeable as far as possible to gases and water vapour is formed.

4. A process as claimed in claim 3, characterized in that the powder-form or fibrous material is dried in a microporous envelope.

5. A process as claimed in claim 3, characterized in that the powder-form or fibrous material is press-moulded in a microporous envelope and then optionally dried.

6. The use of the moulding claimed in claim 1 as a storage, packaging and/or transport container for temperature-sensitive goods.

7. The use of one or more of the mouldings claimed in claim 1 for the heat insulation of refrigerators or deep-freeze cabinets.

## Revendications

1. Solides moulés de préférence sous forme de plaque, pour l'utilisation en isolation thermique, fabriqué à partir

    a) d'une substance finement divisée, pulvérulente ou fibreuse, qui a une capacité d'absorption d'eau de 4 à 50 % en poids à 23°C et à une humidité relative de 85 %,
    b) d'un recouvrement en deux parties avec un arrangement asymétrique, qui renferme cette substance finement divisée, pulvérulente ou fibreuse, dans lequel la première partie du revêtement est une feuille à plusieurs couches dépourvue de métal, qui est assemblée de la façon suivante :
    LLPDE       polyéthylène linéaire
    HV          adjuvant d'adhérence
    EVOH        copolymère-éthylène/alcool vinylique
    HV          adjuvant d'adhérence
    LLPDE       polyéthylène linéaire
    PVDC        chlorure de polyvinylidène
    et est creusé par perçage profond de sorte, que ce creux est rempli complètement par la substance pulvérulente ou fibreuse, éventuellement séchée et éventuellement comprimée et la deuxième partie est une feuille à plusieurs couches métallifère, qui est assemblée de la façon suivante :
    Polyester
    HV
    Feuille Al
    HV
    Polyester
    et peut être plane et est reliée au creux, de sorte qu'une obturation étanche aux gaz et à la vapeur d'eau est garantie et que les deux parties possèdent ainsi des perméabilités à la vapeur d'eau comprises entre 0 et 0,2 g/m$^2$/d à 23°C et 85 % d'humidité relative, et des perméabilités aux gaz pour $N_2$, $O_2$ et $CO_2$ de - dans l'ensemble - 0 à 0,5 cm$^3$/m$^2$/d/bar à 23°C, avec la propriété d'absorber de l'eau jusqu'à une quantité de 2 à 15 % en poids, sans que de cette façon sa conductibilité thermique ne soit affectée de plus de 25 %.

2. Solide de moulage conformément à la revendication 1, caractérisé en ce que la substance pulvérulente ou fibreuse, a été insérée dans un revêtement microporeux dans le revêtement en deux parties avec assemblage asymétrique.

3. Procédé d'obtention d'un solide de moulage pour l'isolation thermique selon la revendication 1, caractérisé en ce que :

    a) on sèche éventuellement une substance finement divisée, pulvérulente ou fibreuse qui a une capacité d'absorption d'eau de 4 à 50 % en poids à 23°C et 85 % d'humidité relative, dans les conditions qui suffiset pour l'élimination de l'eau superficielle,
    b) on comprime la substance pulvérulente ou fibreuse, le cas échéant, sous une forme pour laquelle, le cas échéant, un moule de pressage peut être utilisé,
    c) on introduit la substance éventuellement séchée et éventuellement comprimée, pulvérulente ou fibreuse dans la partie dépourvue de métal, creusée (profonde), du recouvrement qui comporte une perméabilité à la vapeur d'eau allant de 0,02 à 0,2 g/m$^2$/d à 23°C et 85 % d'humidité relative, et des perméabilités aux gaz pour $N_2$, $O_2$ et $CO_2$ de - dans l'ensemble - 0,05 à 0,5 cm$^3$/m$^2$/d/bar à 23°C,
    d) on soumet au vide la substance pulvérulente ou fibreuse éventuellement séchée et, le cas échéant, comprimée, dans la partie creusée du recouvrement (à une pression comprise entre 0,1 et 1 mbar),
    e) on relie, sous vide la deuxième partie dépourvue de métal ou métallifère et plane, du revêtement qui possède une perméabilité à la vapeur d'eau allant de 0 à 0,2 g/m$^2$/d à 23°C et 85 % d'humidité relative et des perméabilités aux gaz pour $N_2$, $O_2$ et $CO_2$ de - dans l'ensemble - 0 à 0,5 $cm^3/m^2/d/bar$ à 23°C, avec la première partie de recouvrement dépourvue de métal, de sorte que le vide persiste à l'intérieur du recouvrement et qu'il se forme une obturation - pour autant que possible - étanche aux gaz et à la vapeur d'eau.

4. Procédé selon la revendication 3, caractérisé en ce que l'on sèche la substance pulvérulente ou fibreuse en un recouvrement microporeux.

5. Procédé selon la revendication 3, caractérisé en ce que l'on comprime la substance pulvérulente ou fibreuse en un revêtement microporeux et qu'ensuite le cas échéant on sèche.

6. Utilisation d'un solide moulé selon la revendication 1 comme récipient de stockage, d'emballage, et/ou de transport pour des marchandises sensibles à la température.

7. Utilisation d'un ou plusieurs solides de moulage conformément à la revendication 1 pour l'isolation thermique de réfrigérateurs ou de congélateurs.

# Fig. 1: WÄRMELEITFÄHIGKEIT VON FK 500 LS ALS FUNKTION DES FEUCHTEGEHALTES

+ WÄRMELEITFÄHIGKEIT
* DRUCK IM PANEL
FEUCHTE MIT MIKROWELLE EINGESTELLT
PRESSDICHTE: 200 g/l

EP 0 463 311 B1

**Fig. 2:** WÄRMELEITFÄHIGKEIT VON FK 500 LS ALS FUNKTION DES FEUCHTEGEHALTES

+ WÄRMELEITFÄHIGKEIT

* DRUCK IM PANEL

FEUCHTE IM TROCKENSCHRANK EINGESTELLT

PRESSDICHTE: 200 g/l

EP 0 463 311 B1

**Fig. 3:** WÄRMELEITFÄHIGKEIT VON FK 320 DS ALS FUNKTION DES FEUCHTEGEHALTES

+ WÄRMELEITFÄHIGKEIT
\* DRUCK IM PANEL
FEUCHTE IM TROCKENSCHRANK EINGESTELLT
PRESSDICHTE: 210 g/l

EP 0 463 311 B1

Fig. 1.: EINFLUSS DES DRUCKES AUF DIE WÄRMELEITFÄHIGKEITEN VON FK 500 LS UND FK 320 DS

WÄRMELEITFÄHIGKEIT [mW/(m·K)]

DRUCK [mbar]

+ FK 500 LS (180g/l)
* FK 320 DS (200g/l)